Europäisches Patentamt

(19) European Patent Office

Office européen des brevets

(11) Publication number: **0 087 302**

**A1**

## (12) EUROPEAN PATENT APPLICATION

(21) Application number: **83300877.4**

(22) Date of filing: **21.02.83**

(51) Int. Cl.³: **F 02 C 7/36**

(30) Priority: **22.02.82 US 350803**

(43) Date of publication of application:
**31.08.83 Bulletin 83/35**

(84) Designated Contracting States:
**DE FR GB SE**

(71) Applicant: **A/S Kongsberg Väpenfabrikk**
**Kirkegardsveien**
**N-3600 Kongsberg(NO)**

(72) Inventor: **Mowill, Rolf Jan**
**Rudgeveien 7**
**N-Oslo 3(NO)**

(74) Representative: **Jackson, David Spence et al,**
**REDDIE & GROSE 16, Theobalds Road**
**London, WC1X 8PL(GB)**

(54) Gas turbine engine operating method and apparatus therefor.

(57) A recuperated gas turbine engine (10) has series con-
nected low and high pressure compressor stages (30, 32)
having independently rotatable shafts (44, 46). The turbine
shaft (46), low pressure compressor shaft (44) and engine
output shaft (28) are differentially coupled with a planetary
gearing assembly (50), with a sprag clutch override (100)
connection between the output shaft (28) and the low
pressure compressor shaft (44) to limit the speed reduction
of the low pressure compressor stage (30). A variable speed
transmission (108) is connected between the low pressure
compressor shaft (44) and the engine output shaft (28) to
aerodynamically match the high and low pressure compress-
or stages (30, 32). A brake (124) is geared to the output shaft
(28), a starter (126) is coupled to the low pressure compress-
or shaft (44), and the planetary gear ratios are selected to
allow preferential acceleration of low pressure stage (30)
relative to the high pressure stage (32) and the turbine (12)
during start-up. The method of automatically reducing the air
mass flow rate during part load operations follows a
predetermined fuel flow schedule to maintain rated combus-
tion temperatures.

EP 0 087 302 A1

./...

FIG 1.

## GAS TURBINE ENGINE OPERATING METHOD AND APPARATUS THEREFOR

This invention relates to improvements in methods and apparatus associated with the operation of gas turbine engines, particularly recuperated gas turbine engines.

All known gas turbine engines suffer from high part load fuel consumption compared with reciprocating piston engines such as the diesel engine. Full load efficiencies equal to or better than the best piston engines can be achieved by gas turbine engines when equipped with exhaust heat exchangers (regenerators) to recover heat values normally wasted. The heat values are transferred to the inlet air prior to combustion with the fuel. Such engine are commonly known as recuperated gas turbine engines and are especially suited for electric power generation applications.

In such recuperated gas turbines it is of particular importance for achieving good part load efficiency to maintain the highest possible cycle temperature at lower output powers. This effect can be achieved by varying (reducing) the mass flow rate of air for combustion in addition to and/or instead of varying the cycle temperature to vary load levels. The specific methods employed so far have relied upon vanes or other apparatus to partially block the air flow path to throttle the inlet air. These methods are inherently inefficient as they introduce aerodynamic losses which to a great extent offset the advantages.

The gas turbine engine made according to the present invention achieves the enhanced part load efficiencies by reducing the inlet air flow at reduced engine loads and fuel flow rates, but without introducing the unacceptable aerodynamic losses associated with throttling methods and devices. The present invention also yields advantages in reduced start-up times for gas turbine engines thereby increasing suitability for emergency standby power applications.

In accordance with the present invention, as embodied and broadly described herein, the method for controlling the mass flow rate of air to the combustor of a gas turbine engine for maintaining combustion temperature during reduced engine load conditions as close as possible to that at the maximum rated condition, the engine having an output shaft, a compressor having at least two independently rotatable stages, and a turbine, comprises compressing air in a first compressor stage operating at a first pressure ratio, said compressing step including the sub steps of sensing engine load, directly varying the rotational speed of said first compressor stage as a function of the sensed load; further compressing the air in a second compressor stage operating at a second pressure ratio; and admitting the further compressed air to the combustor.

Preferably, the method is utilized for increasing efficiency of a recuperated gas turbine engine during reduced load operation, the engine also having heat exchanger means for transferring heat values from the expanded combustion gases exiting the turbine to the compressed air entering the combustor, and further includes means for decreasing fuel flow to the combustor during reduced load operation, wherein the main flow varying step includes the step of adjusting the air mass flow rate to the combustor in accordance with the reduced fuel flow to maintain combustion gas temperatures at near rated condition, and wherein the substeps are accomplished by differentially coupling the output shaft to the shaft of the low pressure compressor stage and the turbine shaft.

Further in accordance with the present invention, the apparatus for controlling the mass flow rate of air in a gas turbine engine for improved performance during reduced load operation, the engine having a combustor, a turbine including a turbine shaft, and a power output shaft, comprises a rotary compressor having at least two stages including a low pressure stage for compressing air received from the ambient, and a high pressure stage for further compressing the compressed air received from the low pressure stage and delivering the further compressed air to the combustor, each of the low and high pressure stages having an independently rotatable shaft; differential coupling means for operatively connecting the shafts of the turbine and the low pressure compressor stage with the output shaft, the differential coupling means providing for a simultaneous reduction in rotational speed of the low pressure compressor stage with a reduction in power supplied by the output shaft; and override means associated with the differential coupling means and operatively connected between the output shaft and the low pressure compressor stage shaft for limiting the reduction in rotational speed of the low pressure compressor stage to a preselected value.

Preferably, the override means includes a sprag clutch, and also includes transmission means for smoothly and selectively adjusting the differential speed relationship between the output shaft and said low pressure compressor stage shaft for optimizing the aerodynamic matching of said low and said high pressure compressor stages during full load operation.

It is further preferred that the differential coupling means also operatively connect the high pressure compressor shaft to the low pressure compressor shaft and the output shaft, the apparatus further including means for preferentially accelerating the low pressure compressor stage shaft relative to the high pressure stage shaft during start-up from essentially zero speed, zero load conditions.

And it is still further preferred that the preferential accelerating means includes engine starting means operatively connected to the low pressure compressor shaft for rotationally accelerating the low pressure compressor shaft, and brake means operatively connected to the output shaft for preventing rotation thereof until the brake means is disengaged, and wherein the differential coupling means includes planetary gear means having preselected gear ratios such that the angular speed of the low pressure compressor stage is greater than that of the high pressure compressor stage when the output shaft is constrained from rotating.

The invention will now be described in more detail, solely by way of example, with reference to the accompanying drawings, in which:

Fig 1 is a schematic representation of a recuperated radial flow gas turbine engine made in accordance with the present invention;

Fig 2 is a graph showing the expected qualitative comparison of the performance of the gas turbine engine depicted in Fig 1 relative to other power producing engines;

Fig 3 is a graph showing qualitatively the expected speed versus load relationship of the engine depicted in Fig 1; and

Fig 4 is a graph showing qualitatively the expected speed of various components of the engine depicted in Fig 1 during start-up.

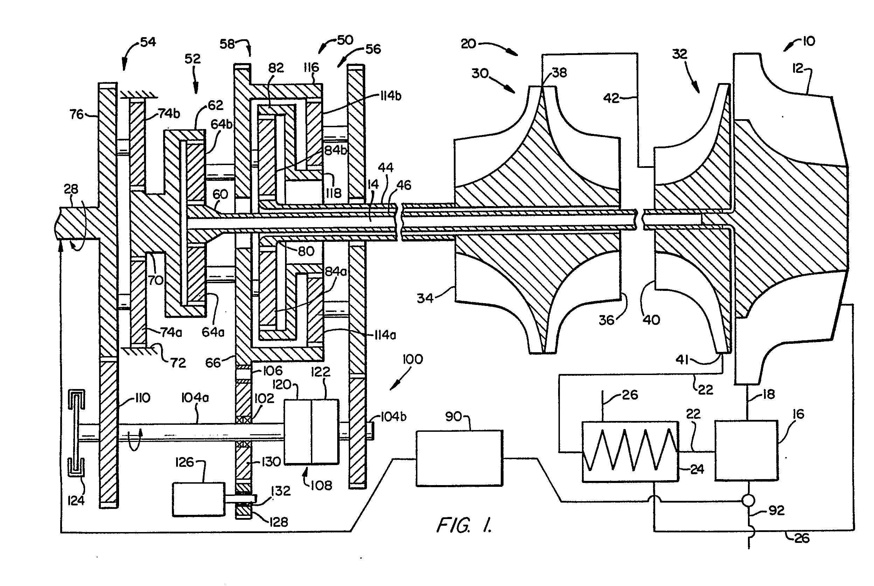

A recuperated radial gas turbine engine 10 embodying the present invention is shown in Fig 1 and includes a radial turbine 12 connected to a turbine shaft 46, a combustor 16 with associated ducting 18 for feeding combustion gases to the turbine 12, and a compressor unit 20. Compressed air exits compressor unit 20 and is fed to combustor 16 through ducting 22 after passing through a regenerator 24. The turbine exhaust is fed through the regenerator 24 along ducting 26 to provide recoverable heat values for transfer to the compressed air. Power generated in the turbine 12 by the expansion of hot combustion gases is ultimately delivered via turbine shaft 46 to an engine output shaft 28. The use of radial-type turbine 12 is not to be construed as a limitation on the present invention but merely illustrative. The present invention can be utilized with axial turbine stages and mixed axial-radial machines.

In accordance with the present invention, the apparatus for controlling the main flow rate of air in gas turbine engines during reduced load generation includes at least two series connected compressor stages capable of independent rotation. As embodied herein, the compressor unit 20 includes a low pressure stage 30 and a high pressure stage 32. Low pressure stage 30 is depicted as a dual entry/single exit centrifugal-type compressor having axially directed inlets 34, 36 and a radially directed exit 38. High pressure stage 32, which also is shown as a centrifugal-type compressor, receives air compressed from low pressure stage 30 through an inlet 40 via a duct 42 and delivers the additionally compressed air from an exit 41 to the duct 22. Again, the use of a centrifugal-type compressor, including a multiple entry/single exit configuration, is merely illustrative of the invention and not to be construed as limiting the invention.

Importantly, and as further described herein, the low pressure compressor stage 30 is mounted for rotation on a shaft 44 while the high pressure compressor stage 32 is mounted for rotation on a separate shaft. When the high pressure compressor stage is designed to rotate at the same speed as the turbine, the high pressure compressor stage 32 can be directly coupled to the turbine shaft 46 as in the embodiment shown in Fig 1.

The low pressure compressor stage shaft 44 is hollow and sized for running clearance with the shaft 46 affording the required independent rotation. Other mechanical arrangements and placements for the shafts 46 and 44 are possible and are considered to be within the scope of the invention.

Further in accordance with the present invention, there is provided differential coupling means for operatively connecting the shaft of the turbine, the low pressure compressor stage, and the output shaft. As embodied herein, the differential coupling means includes an epicyclic planetary gear assembly 50 which, in Fig 1, is depicted as having four stages designated generally 52, 54, 56 and 58, respectively. Stage 52 has a sun gear 60, a ring gear 62, and a pair of planetary gears 62a, and 62b operatively connected to a gear carrier 66. Stage 54 has a sun gear 70, a ring gear 72, and a planetary gear pair 74a and 74b operatively connected to a gear carrier 76. And stage 58 has a sun gear 80, a ring gear 82, and a planetary gear pair 84a and 84b operatively connected to the carrier 66.

As can be appreciated from Fig 1, stages 52 and 54 are series connected, stage 54 serving as a speed reduction stage, with ring gear 72 being fixed. Thus, the engine output shaft 28, directly coupled to gear stage 54, is indirectly coupled to the ring gear 62 of stage 52. Further, it can be seen that low pressure compressor stage shaft 44, which is directly coupled to the sun gear 80 of stage 58, is also indirectly coupled to the planetary gears 64a and 64b of stage 52 via planetary gears 84a, 84b and common carrier 66. However, the angular velocity relationship between the carrier 66 and the sun gear 80 (and thus shaft 44) is not fixed due to the presence of stage 56 which will be explained henceforth. And finally, the sun gear 60 is directly connected to the shaft 46 for the turbine and the high pressure · compressor stage.

It will be readily understood by those skilled in the art that because the engine output shaft 28, the turbine shaft 46 and low pressure compressor shaft 44 are each coupled to different stages of the planetary gear assembly 50, the shaft 46 being coupled to the stage 52 and the shaft 44 being coupled to the stage 58, the angular speeds of the respective machinery components are differentially related, according to well understood mathematical formulas. Engine 10 depicted in Fig 1 and made according to the present invention is primarily a constant output shaft speed machine, but with varying speeds for the two rotors of compressor stages 30 and 32.

The actual angular speeds of the low pressure and high pressure compressors can be the same or different at the full load condition depending on the arrangements and geometries selected for differential gear assembly 50. It could be an advantage to run the low pressure compressor stage 30 at a lower speed as is shown in the embodiment in Fig 1 so that the specific speeds of the two compressor rotors could be optimally matched to each other and to the turbine rotor at full load conditions. Also, the high pressure compressor stage 32 need not run at the same speed as the turbine 12 although a same speed configuration is shown in Fig 1.

When load and hence opposing torque is reduced at the essentially constant speed output shaft 28, the low pressure compressor stage 30 will automatically adjust its speed downwards to a degree determined by the geometric ratios utilized in the gear assembly 50. The speed of the high pressure stage 32 will also vary but to a degree much less than the low pressure stage 30. It is desirable to size the high pressure compressor stage 32 to operate at a higher value of pressure ratio during part load conditions than at full load for reasons that will become apparent from the succeeding discussion. A more detailed description of the planetary action employed is described below:

As load drops while the shaft speed is kept constant the torque applied to the low pressure compressor stage 30 drops pro rata. Therefore, its angular speed drops in accordance with an appropriate law:

$$\frac{Nc_2}{Nc_2 \text{ max.}} = \frac{\left[1 + \dfrac{Pc_1 \text{ max.}}{Po \text{ max.}}\right] \times \dfrac{(Nc_1)}{(Nc_1 \text{ max.})}}{1 + \dfrac{Pc_1 \text{ max.}}{Po \text{ max.}}}$$

Notations

N = RPM (Revolutions Per Minute)

P = Power

Subscripts

$c_1$ = low pressure compressor

$c_2$ = high pressure compressor

o = output

Gear assembly 50 thus determines for a given power output at shaft 28 the speed of $Nc_1$ and $Nc_2$ with the $Pc_1 / Po$ as a parameter, $Nc_1$ and $Nc_2$ being the speeds of the shafts 44 and 46 respectively.

As the output falls the speed of both $Nc_1$ and $Nc_2$ is reduced as a function of the load and there is only one turbine inlet temperature that both satisfies the aerodynamic matching of the turbine and the speed/power relation of the gear assembly 50. It is contemplated that an engine fuel control 90 will monitor output torque at constant output shaft (28) speed at various loads and correspondingly vary the fuel inputted to combustor 16 through a fuel line 92. The reduction in fuel flow to combustor 16 during reduced load operation must be balanced by a reduced air flow from compressor section 20 in order to maintain a high temperature at the inlet 18 of the turbine 12. This temperature generally will be approximately that at rated conditions, and control and maintenance of this temperature is of the utmost importance in achieving high operating efficiencies in regenerated gas turbine engines.

The temperature and pressure ratio over the cycle ideally will be varied in such a way as to maintain approximately the same head coefficient

$$\frac{\Delta\text{ Hisen}}{U_T^{\,2}}$$ where $\Delta\,H_{isen}$ in isentropic change in enthalpy

and $U_T$ is the angular speed of the turbine, thus maintaining an optimum operating condition for the turbine component even at reduced loads. For the present invention the head coefficient will range between about 0.98 to about 1.13. The compressor characteristics of the two compressors 30 and 32 can be optimized for the cycle since the low pressure and high pressure compressors 30 and 32, respectively, need not run at the same angular speed at maximum load. For a typical regenerated engine, the cycle pressure ratio would be selected between about 4/1 and 12/1. Dividing this pressure ratio over two stages would also provide wide operating characteristics for the compressor portion 20 and give excellent component efficiency.

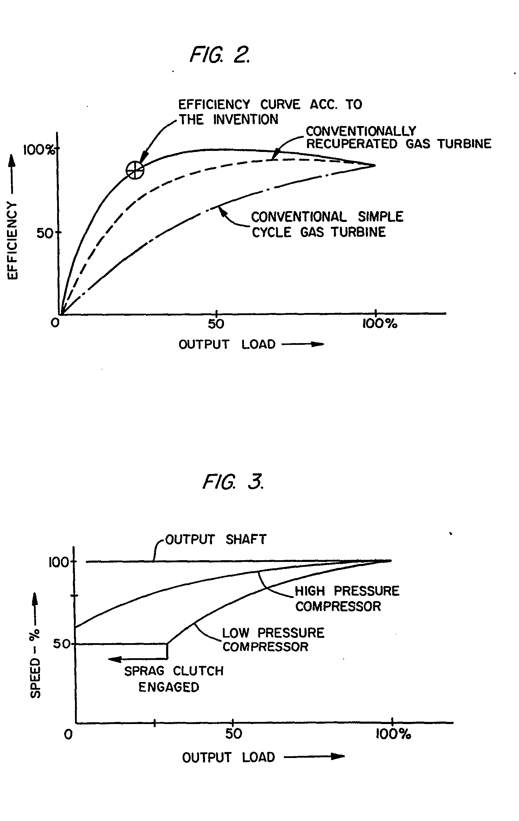

Engines such as 10 made according to the present invention can achieve a far greater reduction in air mass flow than with current methods. The rate of mass flow reduction will, according to the invention, approximately follow the reduction in power to below 50% power. The resulting engine performance, both full load and part load, should give an essentially constant specific fuel consumption (s.f.c.) down to below 50% power thus closely and advantageously matching the characteristics of a diesel efficiency curve as is shown qualitatively in Fig 2.

As a consequence of the mathematical relation governing an unaltered epicyclic planetary gear train, the angular speed of the low pressure compressor stage 30 could become unacceptably low during very low load conditions, resulting in a net flow restriction in the compressed air flow path to the combustor 16 and possibly causing other operational problems such as high idle fuel flow and delays in subsequent return to high load conditions. The present invention is also intended to overcome this problem.

Further in accordance with the present invention, override means are provided for limiting the reduction in rotational speed of the low pressure compressor stage 30. As embodied in the example shown in Fig 1, the override means 100 includes a sprag clutch 102 operatively connected between the output shaft 28 and the low pressure compressor stage shaft 44, the sprag clutch 102 being mounted between a shaft section 104a and a gear 130, which engages the carrier 66 of planetary stage 58 through an idler gear 106. Shaft section 104a is coupled via a gear 110 to the carrier 76 of stage 54 of gear assembly 50 and thus to output shaft 28. A sprag clutch is a commonly available one-way device which only allows the transfer of torque in one direction. A ratchet wheel is a crude variant of this principle. Here, eccentric bodies (not shown) are placed in a "ball-bearing"-like fashion. Fig 3 presents qualitatively the speed relationship that should be achievable among the output shaft 28, the high pressure compressor shaft 46, and the low pressure compressor shaft 44 as a result of the override means 100.

The override means also includes means for selectively and continuously adjusting the angular speed relationship between high pressure compressor stage sleeve-shaft 46 and low pressure compressor stage shaft 44. As embodied herein, a variable speed transmission means 108 is operatively connected between the shaft section 104a and a shaft section 104b. Shaft section 104b, in turn, is coupled to the carrier 112 of stage 56 which, in turn, is operatively connected to two planetary gears 114a and 114b engaging the associated ring gear 116 and sun gear 118. As sun gear 118 of stage 58 is directly connected to ring gear 82 (and thus indirectly to the low pressure compressor shaft 44), the differential speed relationship of the shaft 44 to the output shaft 28, and indirectly to the high pressure stage     shaft 46, can be varied by the variable speed transmission means 108. Hence, the present configuration enables optimization of the aerodynamic "matching" between the two compressor stages 30 and 32.

Transmission means 108 may consist of an hydraulic torque converter having two series connected parts, a hydrostatic variable stroke-constant speed component 120 and a hydrostatic fixed stroke-variable speed component 122. Using this arrangement, the relative rotational speeds of shaft 44 and shaft 46 can be smoothly controlled. Other means are available to control the relative rotational speeds of shaft 44 and shaft 46 and these are intended to be included within the scope of the present invention. Apparatus suitable for components 120 and 122 are known to those skilled in the rotating machinery art. For example, constant speed-variable stroke pump-motors are available through Andersen & Ødegaard A.S. of Fyrstikkalleen, Oslo, Norway. The configuration shown in Fig 1 for override means 100 is particularly advantageous because it can be used in conjunction with engine start-up apparatus made in accordance with the present invention, as will be discussed hereinafter.

Further in accordance with the present invention, means are provided to preferentially accelerate the low pressure compressor stage shaft during start-up. This will ensure flow in the correct direction through the engine 10 during this phase of operation. If the low pressure compressor 30 should be stationary at start or lag the high pressure compressor 32 and/or the turbine 12, then the higher diameter radial turbine 12 could act as a compressor during the initial start-up phase and result in unacceptable reverse flow through the engine 10, preventing start-up.

As embodied herein in the example shown in Fig 1, preferential accelerating means includes engine brake means such as a brake 124 operatively connected to the output shaft 28 via the shaft section 104a and gears 110 and 76, and engine-starting means including a starter 126 operatively connected to the low pressure compressor stage shaft 44 via a sprag clutch 132, a gear 128, the gear 130, the idle gear 106, carrier 66, etc. Because the brake 124 is mounted on shaft section 104a, the sprag clutch 102 also permits relative motion between gear 130 and shaft section 104a during the start-up phase. One of ordinary skill would immediately appreciate that other arrangements are possible to operatively connect the brake 124 and starter 126 to the engine 10 through the override means 100.

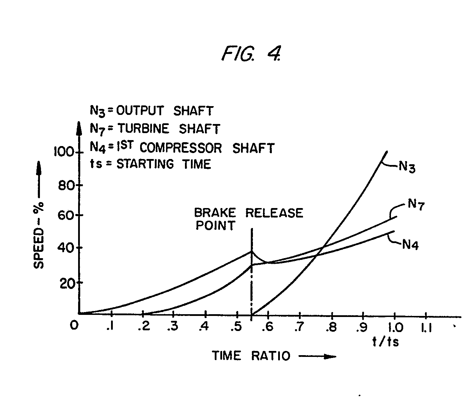

The intended starting sequence for the engine 10 is as follows, and the speeds of the various components are qualitatively depicted in Fig 4 as a function of normalized start-up time:

Starter 126 engages sprag clutch 132 and drives the low pressure compressor shaft 44 via gears 128 and 130 and the planetary gear stage 58. Output shaft 28 is held still by brake 124 during this phase. Sprag clutch 102 allows the shaft section 104a to be at stand still. When output shaft 28 is at standstill, turbine shaft 46 will rotate with a lower speed than low pressure compressor shaft 44 as a result of the selected gear ratios.

At a preselected speed of low pressure compressor shaft 44, the brake 124 is released and the output shaft 28, high pressure compressor and turbine shaft 46,

and low pressure compressor shaft 44 will thereafter rotate at speeds according to the torque split between the three shafts, the torques being proportional to the rate of acceleration of the shafts. The shafts will continue to accelerate until they reach their respective design speeds at zero load. In the example shown in Fig 4, The design speeds are $N_4 = 50\%$, $N_7 = 60\%$, $N_3 = 100\%$.

The preferential acceleration means of the present invention thus enables relatively high rotational speeds to be achieved in low pressure compressor stage 30 during engine start- up, in which case the low pressure compressor stage 30 acts to "supercharge" the high compressor stage 32 and thus provide shorter times to reach operational speeds.

It will be apparent to those skilled in the art that various modifications and variations could be made in the gas turbine engine of the invention without departing from the scope of the invention.

**0087302**

## CLAIMS

1.    A method for controlling the mass flow rate of air to the combustor of a gas turbine engine for maintaining combustion temperature during reduced engine load conditions as close as possible to that at the maximum rated condition, the engine having an output shaft, a compressor having at least two independently rotatable stages, and a turbine, the method being characterised by the steps of:

1)    compressing air in a first compressor stage operating at a first pressure ratio, the said compressing including

(a)    sensing engine load;

(b)    directly varying the rotational speed of the first compressor stage as a function of the sensed load;

2)    further compressing the air compressed in step 1) in a second compressor stage operating at a second pressure ratio; and

3)    admitting the further compressed air to the combustor.

2.    A method according to claim 1, characterised in that the output shaft rotates at essentially constant speed over the entire engine load range, and directly varying the rotational speed of the first compressor stage includes differentially relating the rotational speed of the first compressor stage to the rotational speed of the turbine and the output shaft.

3.    A method according to claim 1, characterised in that the sensing of the engine load includes automatically sensing the torque on the output shaft and automatically varying the first stage rotational speed.

4.    A method according to claim 2, characterised in that the said differentially relating of speeds is accomplished by mechanically connecting the turbine to the first compressor stage through a differentially planetary gear assembly.

5.      A method according to claim 2, characterised by limiting the reduction in speed of the first compressor stage to a preselected minimum value during part load operation so as to facilitate subsequent speed-up to higher load conditions.

6.      A method according to claim 5, chacterised in that the first compressor stage is connected to the turbine through a differential planetary gear assembly of one or more stages including a sun gear connected to the turbine, planetary gears having a carrier connected to the first compressor stage, and a ring gear operatively connected to the engine output shaft, the said speed reduction limiting including the selective overriding of the differential coupling between the first compressor stage and the output shaft.

7.      A method according to claim 1, characterised in that the varying of the speed of the first compressor stage as a function of the sensed load includes the accelerating of the first compressor stage faster than the second compressor stage during start-up from essentially zero speed, zero load conditions, for supercharging the second compressor stage.

8.      A method according to claim 2, characterised in that the said further compressing of the air includes the rotating of the second compressor stage at a speed directly proportional  · to the speed of the turbine.

9.      A method according to claim 8, characterised in that the second compressor stage rotates at the same speed as the turbine.

10.      A method according to claim 2, characterised in that the speeds of the first compressor stage and the second compressor stage are also differentially related, the method further including the step of selectively adjusting the first stage-second stage differential relation so that at full load conditions the first and

**0087302**

second compressor stages are rotated and configured such that their specific speeds are optimized.

11. A method according to claim 2, characterised in that at full load conditions the first and second compressor stages are so rotated that the speed of the first compressor stage is lower than the speed of the second compressor stage.

12. A method according to claim 1, characterised in that the overall pressure ratio for the combined first compressor stage and second compressor stage is between about 4/1 and 12/1 at full load.

13. A method according to claim 12, characterised in that the overall pressure ratio at full load is divided between the first compressor stage and the second compressor stage in such a way that the pressure ratio in the first compressor stage is higher than in the second stage.

14. A method according to claim 1, characterised in that the further compressing includes operating the second compressor stage at a higher value of the said second pressure ratio during part load conditions than at full load condition, the size of the second compressor stage being chosen therefor.

15. A method of operating a gas turbine engine for producing power over a range of part load conditions as well as full load condition, the method including the steps of compressing air in a rotary compressor, mixing and combusting the compressed air with fuel in a relatively lean-burning combustor to produce combustion gases at an elevated average temperature, expanding the combustion gases in a turbine and extracting power from the engine via an output shaft constrained to run at essentially constant speed, and throttling the fuel flow to the combustor as a function of engine load, characterised by the steps of:

(a)    correspondingly reducing the mass flow rate of air through the compressor in accordance with reduced engine load and fuel flow for minimizing the reduction in the average temperature of the combustion gases delivered to the turbine over the range of part load conditions, the mass flow reducing step further comprising the substeps of

1)    dividing the compression step between at least two series-connected stages, including a high pressure stage and a lower pressure stage,

2)    sensing the reduced load on the output shaft, and

3)    smoothly and controllably reducing the rotational speed of the lower pressure stage in accordance with said sensed reduced engine load; and

(b)    limiting the reduction in rotational speed of the low pressure stage to a preselected minimum value during part load operation for facilitating subsequent speed-up to higher load conditions.

16.    A method of operating a gas turbine engine for producing power over a range of part load conditions as well as full load condition, the method including the steps of compressing air in a rotary compressor, mixing and combusting the compressed air with fuel in a relatively lean-burning combustor to produce combustion gases at an elevated average temperature, expanding the combustion gases in a turbine, the compressor being driven by the turbine, extracting power from the engine via an output shaft constrained to run at essentially constant speed, and throttling the fuel flow to the combustor as a function of engine load, characterised by the steps of:

(a)    correspondingly reducing the mass flow rate of air through the compressor in accordance with reduced engine load and fuel flow for minimizing the reduction in the average temperature of the combustion gases delivered to the turbine over the range of part load conditions, the mass flow reducing step further comprising the substeps of

1) dividing the compression step between at least two series-connected stages, including a high pressure stage and a lower pressure stage, the rotational speeds of the turbine, the low pressure stage and the output shaft, being differentially coupled,

2) sensing the reduced load on the output shaft, and

3) smoothly and controllably reducing the rotational speed of the lower pressure stage in accordance with said sensed reduced engine load; and

(b) maintaining the value of the turbine head coefficient ( $\Delta H_e/U_t^2$ ) within a preselected range by simultaneously decreasing the turbine pressure ratio in accordance with the decrease in the turbine speed, where

$\Delta H_e$ is the isentropic change in the specific enthalpy of the combustion gases, and

$U_t$ is the speed of the turbine.

17. A method according to claim 16, characterised in that the preselected range of the turbine head coefficient is about 0.98 to about 1.13.

18. A method for increasing efficiency of a recuperated gas turbine engine during reduced load operation, the engine having a combustor for receiving compressed air and fuel for producing combustion gases; a turbine including a turbine shaft for expanding the combustion gases to produce power; heat exchanger means for transferring heat values from the expanded combustion gases exiting the turbine to the compressed air entering the combustor; an output shaft for delivering power to a load; and means for decreasing fuel flow to the combustor during reduced load operation, and the method being characterised by the steps of:

(a) compressing the air in two separate series connected rotary compressor stages, a low pressure stage and a high pressure stage, each stage having a separate shaft; and

(b) adjusting the air mass flow rate to the combustor in accordance with the reduced fuel flow to maintain combustion gas temperatures at near rated condition, the adjusting step including the substeps of

(i)     automatically sensing the reduced load on the output shaft,

(ii)    automatically reducing the rotation speed of the low pressure stage in accordance with the sensed reduced load, the said substeps being accomplished by differentially coupling the output shaft to the shafts of the compressor stages.

19.     Apparatus for controlling the mass flow rate of air in a gas turbine engine (10) for reduced load operation, the engine having a combustor (16), a turbine (12) including a turbine shaft (14), and a power output shaft (28) and the apparatus being characterised by

a)     a rotary compressor having at least two stages (30, 32) including a low pressure stage (30) for compressing air received from the ambient, and a high pressure stage (32) for further compressing the compressed air received from the low pressure stage (30) and delivering the further compressed air to the combustor (16), each of the low and high pressure stages (30, 32) having an independently rotatable shaft (44, 46);

b)     differential coupling means (50) for operatively connecting the shafts (14, 44) of the turbine (12) and the low pressure compressor stage (30) with the output shaft (28), the differential coupling means (50) providing for a simultaneous reduction in rotational speed of the low pressure compressor stage (30) with a reduction in power supplied by the output shaft (28);

c)     override means (100) associated with the differential coupling means (50) and operatively connected between the output shaft (28) and the low pressure compressor stage shaft (44) for limiting the reduction in rotational speed of the low pressure compressor stage (30) to a preselected value.

20.     Apparatus according to claim 19, characterised in that the differential coupling means includes an epicyclic planetary gear train (50) including at least one planetary stage (52) having a sun gear (60), a pair of planetary gears (64a, 64b) with an associated carrier (66), and a ring gear (62), wherein the said output shaft (28), the low pressure compressor stage shaft (44) and the turbine shaft (14) are individually and operatively connected to a different one of the said sun gear (60), the said carrier (66), and the said ring gear (62).

21.    Apparatus according to claim 20, characterised in that the epicyclic planetary gear train (50) includes

   a)    series-connected first and second planetary stages (52, 54), the sun gear (70) of the second planetary stage (54) being operatively connected to the ring gear (62) of the first planetary stage, wherein the turbine shaft (14) is operatively connected to the sun gear (60) of the first planetary stage (52), the output shaft (28) is operatively connected to the carrier (76) of the planetary gears (74a, 74b) in the second planetary stage (54), and

   b)    series-connected third and fourth planetary stages (56, 58), the sun gear (118) of the third stage (56) being operatively connected to the ring gear (82) of the fourth planetary stage (58), wherein the ring gear (116) of the third planetary stage (56) is operatively connected to the planet gear carrier (66) in the first planetary stage (52) and the low pressure compressor stage shaft (44) is operatively connected to the sun gear (80) in said fourth planetary stage (58).

22.    Apparatus according to claim 21, characterised in that the first stage planetary carrier (66) is also the fourth stage planetary carrier, and wherein the second stage ring gear (72) is fixed.

23.    Apparatus according to claim 21 or 22, characterised in that the override means (100) is operatively connected between the second stage carrier (76) and the third stage carrier (112).

24.    Apparatus according to claim 19, characterised in that the override means (100) includes a sprag clutch (102).

25.     Apparatus according to claim 19, characterised in that the override means (100) also includes transmission means (108) for smoothly and selectively adjusting the differential speed relationship between the high pressure compressor stage shaft (46) and the low pressure compressor stage shaft (44) for optimizing the aerodynamic matching of the low and high pressure compressor stages (30, 32) during full load operation.

26.     Apparatus according to claim 25, characterised in that the high pressure compressor stage shaft (46) is directly connected to the turbine shaft (14) and in that the override means (100) includes a rotatable override shaft having at least two parts (104a, and 104b), one of the override shaft parts (104a) being operatively connected to the output shaft (28), and the other override shaft part (104b) being operatively connected to the low pressure compressor shaft (44), the said transmission means (108) coupling the two override shaft parts (104a, 104b) together.

27.     Apparatus according to claim 26, characterised in that the said transmission means (108) includes a hydrostatic transmission comprising (i) a variable stroke-constant speed component operatively connected to said one bypass shaft part, and (ii) a fixed stroke-variable speed component operatively connected to the variable stroke-constant speed component and to the said other override shaft part (104b).

28.     Apparatus according to claim 19, characterised in that the differential coupling means (50) also operatively connects the high pressure compressor shaft (46) to the low pressure compressor shaft (44) and the output shaft (28), the apparatus further including means (124, 126, 128, 132) for preferentially accelerating the low pressure compressor stage shaft (44) relative to the high pressure stage shaft (46) during start-up from essentially zero speed, zero load conditions.

29.    Apparatus according to claim 28, characterised in that the preferential accelerating means includes engine starting means (126) operatively connected to the low pressure compressor shaft (44) for rotationally accelerating the low pressure compressor shaft (44), and brake means (124) operatively connected to the output shaft (28) for preventing rotation thereof until the brake means (124) is disengaged, and that the differential coupling means (50) includes planetary gear means (52, 54, 56, 58) having preselected gear ratios such that the angular speed of the low pressure compressor stage (44) is greater than that of the high pressure compressor stage (46) when the output shaft (28) is constrained from rotating.

FIG. 1.

1/3

0087302

## FIG. 2.

## FIG. 3.

0087302

# FIG. 4.

N₃ = OUTPUT SHAFT
N₇ = TURBINE SHAFT
N₄ = 1ST COMPRESSOR SHAFT
ts = STARTING TIME

BRAKE RELEASE POINT

SPEED – %

TIME RATIO

t/ts

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-B-1 049 159 (BMW)<br><br>* Claims 1,2 * | 1-4,9,<br>15,16 | F 02 C 7/36 |
| X | GB-A- 817 591 (PARSONS)<br><br>* Claims 1-4 * | 1-4,9,<br>20 | |
| X | FR-A-1 205 114 (RUBERT)<br><br>* Claims 2-4; page 3, lines 47-65 * | 1-4,9,<br>18 | |
| A | GB-A- 711 789 (ROLLS-ROYCE) | | |
| A | DE-B-1 030 104 (JUNKERS) | | TECHNICAL FIELDS SEARCHED (Int. Cl. ³)<br><br>F 02 C |
| A | AUTOMOBILTECHNISCHE ZEITSCHRIFT, vol. 70, no. 5, May 1968, pages 150-156, Stuttgart, DE.<br>M. WOLF: "Ein FIAT-Versuchs-Turbomotor mit Leistungsverteilung zwischen Verdichter und Abtrieb"<br><br>--- -/- | | |

The present search report has been drawn up for all claims

| Place of search<br>THE HAGUE | Date of completion of the search<br>10-06-1983 | Examiner<br>NORDSTRÖM |
|---|---|---|

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. 3) |
|---|---|---|---|
| A | THE OIL ENGINE AND GASTURBINE, vol. 26, July 1958, pages 123-124 W. HRYNISZAK: "Cycle arrangements applied to automotive turbines. Part 2 - The free compressor differential gas turbine" | | |

-----

TECHNICAL FIELDS SEARCHED (Int. Cl. 3)

The present search report has been drawn up for all claims

| Place of search THE HAGUE | Date of completion of the search 10-06-1983 | Examiner NORDSTRÖM |
|---|---|---|